Europäisches Patentamt

European Patent Office

Office européen des brevets

(19)

(11) Publication number: **0 396 512**
**A2**

(12) **EUROPEAN PATENT APPLICATION**

(21) Application number: **90830167.4**

(22) Date of filing: **13.04.90**

(51) Int. Cl.5: **B32B 31/00, A41B 13/10**

(30) Priority: **03.05.89 IT 4790989**

(43) Date of publication of application:
**07.11.90 Bulletin 90/45**

(84) Designated Contracting States:
**AT BE CH DE DK ES FR GB GR LI LU NL SE**

(71) Applicant: **ABATEC S.R.L.**
**Via Pascoli, 28**
**I-65040 Cappelle Sul Tavo, Pescara(IT)**

(72) Inventor: **Odoardi, Renzo Marcello**
**Via I Maggio s.n.**
**I-65027 Scafa (PE)(IT)**
Inventor: **Luberti, Rolando**
**Via Arenazze, 20/B**
**I-66100 Chieti(IT)**

(74) Representative: **Lanzoni, Luciano**
**c/o Bugnion S.p.A. Piazza dei Re di Roma, 21**
**I-00183 Roma(IT)**

(54) **Process and equipment for continuous manufacture of a multilayer absorbent hygiene article, in particular a bib, and the article thus obtained.**

(57) In a continuous process for manufacturing absorbent hygiene aids by assembling single- or multi-ply strip materials, the component strips are fed into equipment which glues them together, applies an adhesive label, heat-seals selected contours before and after folding in one of the longitudinal edges to form a band of double thickness, and then cuts across the continuous composite strip thus obtained to obtain single pieces which are stacked, counted, and cut to shape through the heat-sealed contours.

The equipment shown by way of example is designed to turn out a bib fashioned from a strip comprising at leat two layers (13, 14), one waterproof, one absorbent and/or with filtering properties, which has a heat-sealed neckline (101) at the one end and can be provided with a pocket (108) at the other, obtained by folding in the longitudinal edge (51) of the running strip opposite to that from which the neck is cut.

fig. 2

EP 0 396 512 A2

The present invention relates to the manufacture of absorbent articles for hygiene purposes, and more in particular, to a process for the continuous production of a multilayer material, to equipment for its implementation, and to a specific article, namely a disposable bib.

In the art field in question, the manufacture of multilayer strip material by continuous methods is beset with certain difficulties, in particular when a product of given shape must be obtained from the strip. In most instances, such a contingency has hitherto dictated the adoption of a non-continuous process, with all its attendant drawbacks, namely waste of time and the need for extra personnel and equipment in transferring materials in process from one station of the production line to another. Accordingly, the object of the invention is to provide a method and equipment for the manufacture of a multilayer material in strip format, composed of single-ply or multi-ply component strips that include a material with filtering properties, such as non-woven fabric, an absorbent such as wadding, cellulose or other material, and a material having waterproof properties, generally a thermoplastic such as polyethlyene.

A further object of the invention is to provide a method and equipment suitable for the manufacture of disposable hygiene articles which envisages, amongst other operations, combining and bonding together layers of strip material, and then shaping them according the type of article it is wished to obtain; shaping, in this context, includes the step of effecting cuts in the strip material along any given directions.

Another object of the invention is to provide a process and equipment that will admit of operating continuously.

Yet another object of the present invention is to provide a process and equipment for the manufacture of absorbent hygiene articles that will ensure high productivity.

An additional object of the invention is to set forth a particular model of bib, manufactured by implementation of the method disclosed and using the relative equipment, of which the design is such that it can be made up simply and swiftly with the minimum waste of material, and is easy to wear and functional.

The stated objects are realized by adoption of the process for continuous manufacture of an absorbent hygiene article according to the present invention, which is characterized in that it comprises the following steps:
-feeding at least two component strips or sheets of different material, of which each strip or sheet consists in a single- or multi-ply material, and at least one is a thermoplastic, and waterproof;
-bonding together areas of the component strips by applying adhesives selectively to surfaces of the strips destined to be sandwiched under pressure;
-pressing together the component strips with the adhesive applied to their surfaces;
-creating at least first heat-sealed areas in which all layers of the resulting composite strip are fused together;
-applying repositionable adhesive labels or tabs to the composite strip, at selected locations;
-effecting repeated transverse cuts across the full width of the strip at identical intervals to obtain discrete units;
-stacking and counting the discrete units obtained by effecting the transverse cuts;
-effecting a shaping cut through the stack of discrete units, to coincide with the heat-sealed areas.

The option also exists of effecting a shaping cut on each discrete unit singly.

To advantage, the continuous process according to the invention may include the following steps:
-folding double at least one longitudinal side edge of the composite strip;
-creating a second heat-sealed area designed, not least, to secure the folded edge intermittently to the body of the composite strip.

According to the invention, equipment suitable for implementing the aforedescribed steps consists in a succession of devices comprising:
-a supply of at least two strip materials of which at least one is a thermoplastic, and waterproof;
-a feeder and a plurality of drives serving to advance the strip materials, of which the feeder comprises means for uncoiling at least two main supply reels and two reserve reels of the component strips, means for changing over from empty reels to full reels, means for automatic alignment of the strip, and means for tensioning the strip as it uncoils;
-a glueing device comprising means by which to apply adhesive to selected areas of the surface of at least one component strip destined to be matched with areas of the surface of at least one other component strip, and means by which the component strips are pressed together in order to bond the glued surface areas and form a single composite, multilayer strip;
-at least one heat-seal device comprising rotary means by which to create identical and regularly spaced heat-sealed areas in the composite strip;
-at least one device comprising means by which to apply repositionable adhesive labels or tabs to the composite strip at regularly spaced intervals;
-a first cutting device comprising means by which to sever the composite strip transversely into discrete units;
-a device by means of which to stack and count the discrete units, and

-a second cutting device comprising means by which to effect a final shaping cut through the stacked units, coinciding with the previously heat-sealed areas.

Equipment according to the present invention may also comprise further devices preceding the first cutting device, including:
-a folding device serving to double back at least one longitudinal side edge of the composite strip;
-a second heat-seal device comprising rotary means by which to create second heat-sealed areas.

The disposable absorbent hygiene article produced by implementation and adoption of the process and equipment described respectively above, according to the present invention, takes the form of a bib (for children or adults, according to dimensions), consisting in at least two sandwiched layers of thin material, at least one of which waterproof and the other possessing absorbent and/or filtration properties, united at least peripherally around a substantially rectangular outline and shaped to encircle the neck of the user; the bib fashioned in this manner may incorporate a contoured pocket, and will be provided with at least one label and heat sealed in selected areas, particularly around parts of the periphery.

The invention will now be described in detail, by way of example, with the aid of the accompanying drawings, in which:
-fig 1 is a block diagram illustrating the steps of a continuous process for the manufacture of a hygiene article according to the invention;
-fig 2 is a perspective schematically illustrating equipment suitable for implementation of the process of fig 1;
-fig 3 is the partly cut away front view of a bib, constituting the hygiene article according to the invention.

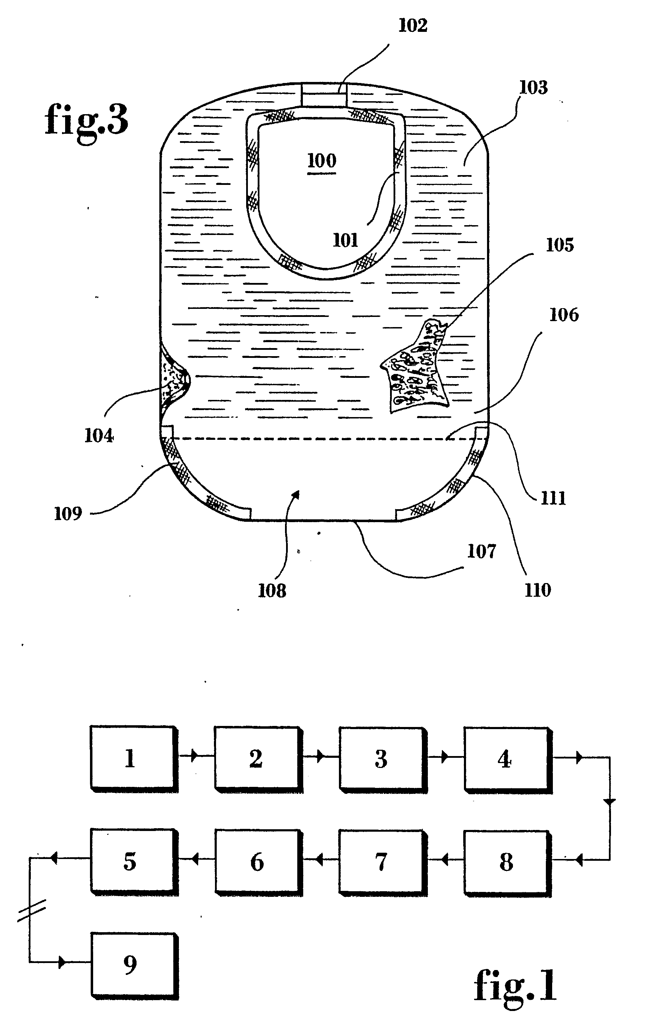

With reference first to fig 1, the blocks numbered 1 to 9 reflect the essential steps of an in-line or continuous process according to the invention.

Block 1 denotes the initial step of infeeding two or more continuous strips of dissimilar material, one at least being a thermoplastic, and waterproof, which together will ultimately be formed into a composite multilayer strip. The layer of plastic, for example polyethylene, might be backed already with an absorbent layer such as wadding, cellulose, or alternatively, the absorbent could be fed in separately.

A further layer destined to be sandwiched together with the others, consisting in non-woven fabric, is designed to function as a filtration medium in the composite strip.

Needless to say, the foregoing description of the number of component strips fed in to the equipment and the nature of the composite strip ultimately obtained implies no limitation on the process, but reflects a preferred procedure for absorbents in general, and for the article under consideration in particular.

At all events, the inclusion of a thermoplastic or other waterproof and heat-sealable layer among the infed materials is central to the invention.

Block 2 indicates the step of glueing the layers, which consists in applying adhesive to at least one face of each two strips to be paired together, and between this pair and further pairs if applicable, to the end of forming a bond between the sandwiched layers. The bond in question, hence the geometry and location of the areas to which adhesive is applied, will depend upon the type of absorbent to be manufactured. The glueing step also comprises the complementary operation, effected following application of the adhesive in patches or streaks, of pressing the matched laters together to render the bond permanent.

Block 3 denotes a first heat-sealing operation effected on the composite strip obtained by pairing together and fusing the component strips. It is by no means essential, however, to include the step at this particular point in the process. The purpose of the heat-sealing operation is to bring about a localized fusion of the thermoplastic material and cause it to permeate the material of the adjacent layers. Besides creating a firmer bond between the sandwiched layers, the seal also provides a ground on which to effect cuts in any given direction while preserving the accuracy of the contour, hence an area in which to work the contour into a given shape, free of any limitation attributable to the structure of the material. Moreover, the firmly bonded areas created by heat-sealing can be used to carry an imprinted design, impressed or in relief, serving to enrich the article,s appearance.

Block 4 denotes the application of adhesive labels or tabs which appear conventionally on almost all products of the type in question.

Block 5 denotes a step of effecting a longitudinal fold in the running strip, the purpose of which will shortly be made apparent, and block 6 denotes a second heat-seal effected on areas of which the shape and location depend substantially on the type of article being manufactured.

Blocks 7, 8 and 9 denote the steps of cutting the continuous strip transversely into discrete units, of stacking and counting the units thus obtained, and of cutting the stacked units to a given shape.

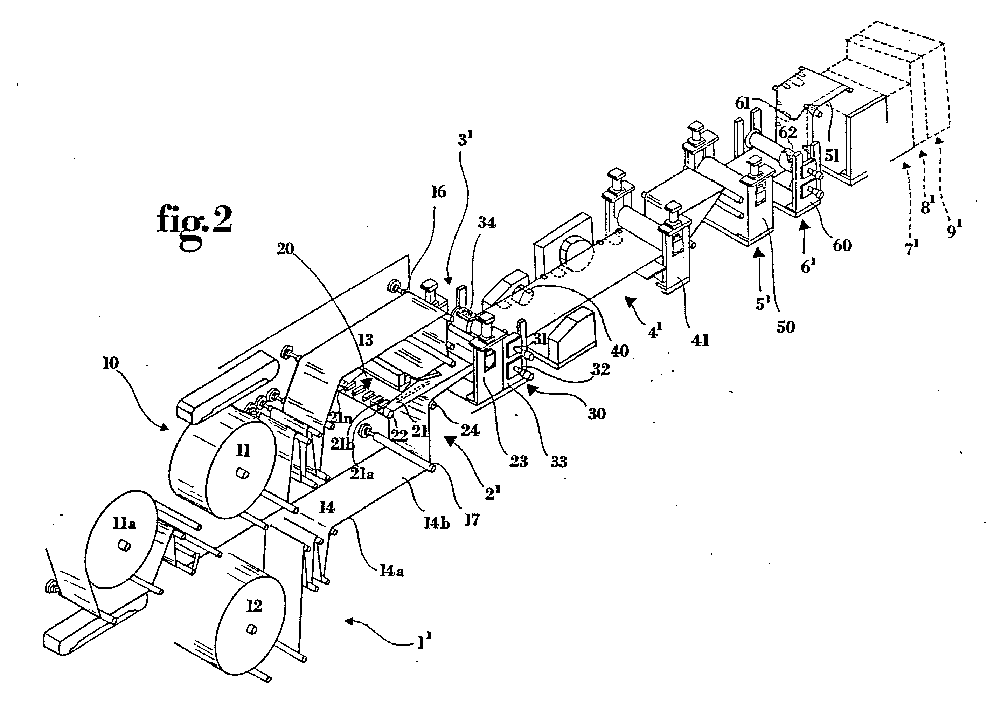

To lend greater depth to the present specification and illustrate the possibilities afforded by the invention in implementation of a continuous process for the manufacture of multilayer absorbents used in hygiene articles, reference will now be made to fig 2, which is a schematic of the various devices in equipment suitable, by way strictly of example, for the manufacture of disposable bibs.

The feeder device 1' comprises a rack 10 carrying a pair of freely revolving supply reels 11 and 12 and a pair of reserve reels (of which one only 11a is illustrated). 13 and 14 respectively denote a strip of non-woven fabric uncoiling from the one supply reel 11, and a two-ply strip uncoiling from the other supply reel 12; more exactly, the two-ply strip comprises a bottom layer 14a of thermoplastic waterproof material, and a top layer 14b, that is, directed toward the strip denoted 13, of absorbent material such as cellulose. Clearly enough, there is nothing to prevent a greater number of reels being utilized to feed a similar number of strips, provided that the necessary modifications are made to the remainder of the equipment.

Whilst the devices which of necessity accompany such an infeed system, i.e. tensioners, alignment mechanisms etc., can be discerned partly in fig 2, these are conventional, and no detailed description is offered.

16 and 17 denote freely revolving rollers over which the respective strips 13 and 14 are directed into a glueing device 2'; this device comprises a machine 20 by which single dabs of adhesive 21 are dispensed from a set of applicators 21a, 21b...21n. The dabs 21 are distributed more or less densely, according to the type of absorbent, onto the bottom face of the uppermost strip 13 which, once beyond a respective guide roller 22, runs toward a rotary press 23 that also serves as a means of uncoiling and advancing the strip material; 24 denotes the guide roller over which the lower strip 14 is drawn into the press 23.

3' denotes a heat-seal device stationed beyond the glueing device 2' along the feed direction, which comprises a machine 30 with two opposed rollers 31 and 32 mounted to a frame 33; as illustrated by way of example in fig 2, the heat-seal die 34 of the machine is of substantially oval shape to suit the manufacture of a bib according to the invention, as will become clear in due course.

The next device 4' comprises machines 40 for the application, at regular intervals, of at least one adhesive label or tab in whatever position happens to be appropriate to the type of product, and a further pinch roll drive 41.

Beyond the labelling device is a folding device 5' comprising a machine with rollers 50, by which the composite strip is drawn and folded double along a given longitudinal line 51. The device 6' next in sequence comprises a further heat-seal machine 60 by which areas 61 are bonded at regular intervals along the surface of the strip, coinciding with the longitudinal fold 51; these areas 61 are sealed with a die 62 of substantially triangular shape, for example, of which the opposite sides appear as symmetrical hyperbolic curves. The sealed areas 61 in question serve to secure the outer edges of the folded part of each individual product and also to establish the external contour.

In the interests of simplicity, fig 2 provides no detailed illustration of the device 7' by which the strip is cut transversely into discrete units, the device 8' by which the cut units are stacked and counted, and the device 9' by which shaping cuts are made around the areas fused by heat-sealing; the three devices are shown in phantom line.

Fig 3 illustrates a disposable bib, the article selected by way of example to illustrate how an absorbent article is fashioned by implemention of the process and using equipment according to the invention. Needless to say, by effecting a number of easily discernible modifications to the cycle, other products, such as sanitary towels, can be turned out with equal ease.

The bib illustrated is substantially rectangular in shape, with rounded corners, and exhibits what is essentially an oval opening 100 with a heat-sealed edge 101; alongside the opening is a repositionable adhesive label 102. The opening 100 will be of dimensions such as to pass over the head of the wearer (in this instance a child), and might be embodied in a different shape, for example with a broken outline and ends that overlap during use. The phantom lines 103 of fig 3 denote streaks of adhesive, which may be distributed uniformly over the entire surface between sandwiched layers. The various layers are shown in cutaway: 104 denotes the bottom waterproof layer, 105 the middle layer of absorbent material, and 106 the top filtering layer.

The bottom edge 107 of the bib coincides with the longitudinal fold 51 of fig 2, the purpose of which is to create a pocket 108; thus, the die 62 serves to seal the edges of the pocket at either side 109 and 110, which are contoured up toward the neck 100 and extend marginally beyond the edge 111 of the fold for a firmer anchorage.

To reiterate, the invention should in no wise be thought of as limited to the manufacture of the article thus described, which itself could be of other shapes and dimensions. The continuous process thus disclosed by which to manufacture multi-ply absorbent strip materials, comprising at least one layer of a thermoplastic and waterproof material and one layer of absorbent, is equally applicable to other products such as sanitary towels, nappies for infants and adults, other types of bibs, as well as aprons, panties, slips and other disposable items of comparable character.

## Claims

1) A process for the continuous manufacture of a multilayer absorbent hygiene article of the type consisting in layers of wadding, cellulose or similar absorbent and layers of non-woven fabric type filtering material,
characterized
in that it comprises the following steps, effected in continuous succession to the end of producing a multilayer absorbent article for hygiene purposes:
-feeding at least two component strips or sheets of different material, of which each strip or sheet consists in a single- or multi-ply material and at least one is a thermoplastic, and waterproof;
-bonding together areas of the component strips by applying adhesives selectively to surfaces of the strips destined to be sandwiched under pressure;
-pressing together the component strips with the adhesive applied to their surfaces;
-creating at least first heat-sealed areas in which all layers of the resulting composite strip are fused together;
-applying repositionable adhesive labels or tabs to the composite strip, at selected locations;
-effecting repeated transverse cuts across the full width of the strip at identical intervals to obtain discrete units;
-stacking and counting the discrete units obtained by effecting the transverse cuts;
-effecting a shaping cut through the stack of discrete units, to coincide with the heat-sealed areas.

2) A process as in claim 1, comprising at least two steps in which heat-sealed areas are created.

3) A process as in claim 1, comprising at least one further step of folding at least one longitudinal edge of the composite strip obtained by pressing.

4) A process as in claim 3, wherein the folding step is effected between a first step of creating first heat-sealed areas and a second step of creating second heat-sealed areas that serve to fuse and secure the folded edge along contours appropriate for the given discrete article in manufacture.

5) A process as in claim 1, wherein the step of creating heat-sealed areas comprises the transfer of an imprinted design to the heat-sealed areas of the composite strip.

6) Equipment for the continuous manufacture of a multilayer absorbent hygiene article of the type consisting in layers of wadding, cellulose or similar absorbent and layers of non-woven fabric type filtering material,
characterized
in that it comprises a succession of devices interlocked to conventional means for synchronization and transfer of the movements of a continuous manufacturing process:
-a supply of at least two strip materials of which at least one is a thermoplastic, and waterproof;
-a feeder (10) and a plurality of drives serving to advance the strip materials, of which the feeder comprises means for uncoiling at least two main supply reels (11, 12) and two reserve reels of the component strips (13, 14), means for changing over from empty reels to full reels, means for automatic alignment of the strip, and means for tensioning the strip as it uncoils;
-a glueing device (20) comprising means (21a, 21b) by which to apply adhesive to selected areas of the surface of at least one component strip destined to be matched with areas of the surface of at least one other component strip, and means (30) by which the component strips are pressed together in order to bond the glued surface areas and form a single composite, multilayer strip;
-at least one heat-seal device comprising rotary means (31, 32, 34) by which to create identical and regularly spaced heat-sealed areas (101) in the composite strip;
-at least one device comprising means (40) by which to apply repositionable adhesive labels (102) or tabs to the composite strip at regularly spaced intervals;
-a first cutting device (7,) comprising means by which to sever the composite strip transversely into discrete units;
-a device by means of which to stack and count the discrete units; and
-a second cutting device (9,) comprising means by which to effect a final shaping cut through the stacked units, coinciding with the previously heat-sealed areas.

7) Equipment as in claim 6, comprising at least two heat-seal devices (30, 60).

8) Equipment as in claim 6, comprising at least one device (50) by means of which at least one longitudinal edge (51) of the composite multilayer strip is folded double.

9) Equipment as in claim 8, wherein the folding device (50) is located between a first heat-seal device (30) and a second heat-seal device (60).

10) Equipment as in claim 6, wherein the heat-seal device comprises a die by means of which to imprint a design on the heat-sealed area in impression or relief.

11) A multilayer absorbent article for hygiene purposes obtained by implementation of the process and using equipment as in preceding claims, characterized,
in that it comprises at least two sandwiched layers of which at least one is a thermoplastic and waterproof (14a), and at least one further layer (13, 14b) with absorbent and/or filtering properties, and exhibits heat-sealed areas (101, 109, 110) coinciding with contoured edges.

12) An article as in claim 11, embodied as a disposable bib.

13) An article as in claims 11 and 12, of which the heat-sealed areas exhibit designs imprinted in impression or relief.

14) An article as in claims 11 and 12, exhibiting at least one folded edge (111) secured at each end by respective heat-sealed areas (109, 110).

fig.3

**100**

**101**

102

103

105

106

104

109

111

108

107

110

fig.1

| 1 | 2 | 3 | 4 |

| 5 | 6 | 7 | 8 |

| 9 |

fig.2

EP 0 396 512 A2